# EUROPEAN PATENT SPECIFICATION

(11) **EP 2 276 041 B1**
(45) Date of publication and mention of the grant of the patent: **25.09.2013**
(21) Application number: 09165491.3
(22) Date of filing: 15.07.2009
(51) Int. Cl.: H01B 17/30

(54) **A device for electric connection and an electric installation**
Vorrichtung für eine elektrische Verbindung und elektrische Anlage
Dispositif de connexion électrique et installation électrique

(43) Date of publication of application: 19.01.2011
(73) Proprietor: ABB Research Ltd., 8050 Zürich (CH)
(72) Inventor: Roseen, Patrik, 724 63 Västerås (SE); Espeseth, Robert, 3714 Skien (NO); Skryten, Pal Kristian, 3715 Skien (NO); Mattozzi, Alessandro, 113 54 Stockholm (SE); Sönsteby, Gunn-Kristin, 3913 Porsgrunn (NO); Bednarowski, Dariusz, 31-952 Kraków (PL); Malinowski, Lukasz, 30-079 Kraków (PL)
(74) Representative: Kock, Ina

(56) References cited:
- EP-A- 1 845 596
- EP-A- 1 865 517
- US-A- 3 257 501
- US-A- 3 604 830

## Description

### Technical Field

The present invention relates to a device for electric connection to an energy supply conductor for medium and/or high voltage, e.g. 12, 24 or 36 kV, comprising a voltage-carrying element with an outer periphery, and a tubular outer shell with an inner periphery, the outer shell defining a longitudinal axis and being formed by a polymer and connected to the voltage-carrying element. The voltage-carrying element extends in the axial direction of the outer shell, and along at least a part of the axial extension of the voltage-carrying element the outer shell extends axially with a space between its inner periphery and the outer periphery of the voltage-carrying element. The outer shell is provided with an outer contact surface for connection to a wall of a container somewhere along said part of the axial extension of the voltage-carrying element, and the outer shell is adapted to separate the space from an atmosphere outside the container to which the device is connected. At least along a section of said part of the axial extension of the voltage-carrying element, the space is filled with a filler of an electrically insulating material other than that of the outer shell, the filler completely filling the space along said section. Further, the present invention relates to an electric installation, comprising such a device and a container with a wall connected to ground.

### Background of the Invention

Traditionally, electric power bushings have been made of an electric insulating part formed by a thermosetting resin, such as epoxy, moulded around an electrical conductor. The purpose of the insulation has been to prevent electric discharges between the conductor and the wall of a container through which the bushing protrudes. The thermosetting resin has been provided with a sufficiently high thickness to provide a satisfactory functionality in this respect. However, moulding thick solid bodies of thermosetting material is a costly process, and alternatives have been searched for.

US 4,458,101 discloses a gas-insulated bushing comprising an elongated epoxy insulating shell. An inner conductor at high voltage is disposed within the shell, and an electrically insulating gas is provided in a space between the conductor and the interior face of the shell.

DE-A1-10 2007 007 498 describes a grommet having a housing of metal in which conductors are disposed. The conductors are electrically insulated from the housing by a glass body provided in a space between the conductors and the housing.

US 3,178,505 discloses a terminal bushing with an insulating outer shell within which a conductor stud is disposed. In the space between the conductor stud and the outer shell is an insulating gas or liquid, e.g. air or oil, provided.

WO-A1-2008/074166 describes a bushing and a method for producing the same by means of a mould. The bushing has a duct for accommodating a conductor rod and comprises an insulating shell which encapsulates an electrical field grading insulation which surrounds the duct.

Instead of using a thermosetting material for the bushing, thermoplastic materials have been suggested. In US-A1-2006/0178026 there is described an electrical connector and a method for forming the same by means of a mould, where an interface shell is formed from a thermoplastic. In EP-A2-1 496 576 a connector comprises an insulating part and an electrically conductive contact part, where the insulating part is injection molded in a thermoplastic plastic.

In prior art, it has also been suggested to let the bushing comprise a tubular body made of a thermoplastic material which is connected to the conductor and has a thin-walled outer shell which is to be connected to the wall of a gas-tight container. There is an empty space between the conductor and the outer shell of the tubular body, and the empty space is in communication with the interior of the gas-tight container, which is suggested to be filled with an electrically insulating gas, such as sulphur hexafluoride, SF₆. The use of thin walled bushings results in lower production costs in relation to the use thermosetting bushings of prior art.

EP-A2-0 381 638 discloses an electric conductor bushing for use in distributing plants which are insulated by the aid of insulating gas. The bushing has a tubular insulating body made of a thermoplastic and adapted to pass through a hole in the plant wall. A conductor extends coaxially through the insulating body, and the space between the conductor and the insulating body is filled with an insulating gas, e.g. SF₆.

WO-A1-2007/065912 discloses a grommet having an insulting body which is made of a thermoplastic and comprises an outer shell and an inner sleeve which encloses a high voltage conducting element disposed in said sleeve along the entire length of the part of the conducting element which extends through said body. The space formed between the inner sleeve and the outer shell is filled with an insulating gas.

However, the use of insulating gas alone in the space between the conductor and the outer shell might be insufficient to attain a guaranteed prevention of electric discharges emanating from the conductor. Should there be any leakage of the insulating gas from the container, a device as suggested in WO-A1-2007/065912, e.g., becomes sensitive and is likely to be subjected to electric discharges. A disadvantage of thin walls of a thermoplastic might also be that they may be subjected to diffusion of moisture from the atmosphere into the container to which the bushing is connected. To overcome these problems, it has been suggested to substitute the gas in the space between the conductor and the thermoplastic outer shell for other materials.

EP-A1-1 845 596 describes a device for electric connection to an energy supply conductor for medium and high voltage comprising an insulating part which is made of a thermoplastic polymer and includes an outer shell and an inner sleeve which encloses a conducting element disposed in said sleeve along the entire length of that part of the conducting element which extends through said insulating part. The space formed between the sleeve and the outer shell is suggested to be filled with a solid material, such as silicone rubber.

WO-A2-2009/047357 discloses a device for electric connection to an energy supply conductor for medium and high voltage comprising an insulating part which is made of a thermoplastic polymer and includes an outer shell and an inner sleeve which tightly encloses a conducting element disposed therein. The inner sleeve is connected to the outer shell by radial walls or struts which axially extend along the axial extension of the conducting element. The space between the sleeve and the outer shell is filled with a filler of an electrically insulating material other than that of the outer shell. It is suggested that the filler comprises an elastomer, or polyurethane as a main constituent. A method for producing such a device is also disclosed, which includes the step of filling said space with a filler in a liquid state and permitting the filler to solidify.

US-A-3604830 discloses a bushing apparatus for outdoor use with a bushing body, a groundable sleeve, a resilient weather casing with sheds and where one end of the casing is clamped to the conductor stud of the bushing body and the other end is clamped to the sleeve. Further the space between the bushing body and the resilient casing is fully filled with liquid insulating material leaving no gas in the space. Since the casing is resilient and flexible it will expand or contract respectively as the liquid insulating material is expanding or contracting due to a temperature raise or decrease.

However, there is still a need for an improved bushing for medium and high voltage which is less complicated to produce in relation to the above-mentioned prior art solutions.

### The Object of the Invention

The object of the present invention is thus to provide an improved bushing for medium and high voltage. It is also an object of the present invention to provide an efficient method for producing a bushing for medium and high voltage. It is a further object of the present invention to provide a bushing for medium and high voltage which can be produced in an efficient way.

### Summary of the Invention

The above-mentioned objects of the present invention are attained by providing a device for electric connection to an energy supply conductor for medium and/or high voltage, e.g. 12, 24 or 36 kV, comprising
a voltage-carrying element with an outer periphery, and
a tubular outer shell with an inner periphery, the outer shell defining a longitudinal axis and being formed by a polymer and connected to the voltage-carrying element,
the voltage-carrying element extends in the axial direction of the outer shell, and along at least a part of the axial extension of the voltage-carrying element the outer shell extends axially with a space between its inner periphery and the outer periphery of the voltage-carrying element,
the outer shell being provided with an outer contact surface for connection to a wall of a container somewhere along said part of the axial extension of the voltage-carrying element,
the outer shell is adapted to separate the space from an atmosphere outside the container to which the device is connected,
at least along a section of said part of the axial extension of the voltage-carrying element the space is filled with a filler of an electrically insulating material other than that of the outer shell, the filler completely filling the space along said section, wherein the outer shell comprises connection means for connecting the outer shell to the voltage-carrying element, and the connection means are adapted to provide a press-fit between the outer shell and the voltage-carrying element.

By the innovative connection means, the outer shell is efficiently attached to the voltage-carrying element, which can be a conductor. The connection means also facilitates the production of the device by efficiently and readily attaching the outer shell to the voltage-carrying element before and during the filling of the space with a filler moulded and permitted to solidify in said space. Hereby, an improved bushing for medium and high voltage is provided, and a bushing for medium and high voltage which can be produced in an efficient way is also provided. By the present invention, a bushing can be easily assembled.

The filler fills the entire cross-section of said space along said section, as seen in the axial, or longitudinal, direction of the outer shell, along said section. The outer contact surface defined herein is a surface against which a grounded wall of a container is to be connected, either directly or via any other element. Accordingly, the outer contact surface is located somewhere on the outer shell. Advantageously, the outer shell comprises a radial flange, advantageously in the same material is the rest of the outer shell, to which the wall of the container is to be connected. The position of the flange therefore generally corresponds to the position of the said outer contact surface and also the intersection plane of the wall through which the device is to protrude. Advantageously, the filler has a higher electrical insulating capacity than air, and advantageously higher than SF₆. Thereby, the filler will inhibit electrical discharges if there is a pressure drop of the SF₆ in the container.

According to an advantageous embodiment of the device according to the present invention, the connections means are situated somewhere along said section of said part of the axial extension of the voltage-carrying element.

According to another advantageous embodiment of the device according to the present invention, the outer shell extends axially with a space between its inner periphery and the outer periphery of the voltage-carrying element between a first end region and a second end region, where the connection means are provided in one of the end regions. By the providing the connection means in one of the end regions, a bushing which can be produced in a more efficient way is provided, which provides for an efficient filling of said space with the filler.

According to a further advantageous embodiment of the device according to the present invention, the connection means are integral with the outer shell. By this embodiment, an uncomplicated structure of the outer shell is provided, which provides for a facilitated and less expensive production of the outer shell, and consequently, a facilitated and less expensive production of the entire device.

According to another advantageous embodiment of the device according to the present invention, the connection means comprise at least one inner contact surface for contact with the outer periphery of the voltage-carrying element, the at least one inner contact surface being provided radially inwardly of the remainder of the inner periphery of the outer shell. By this embodiment, the connection means provide an efficient and uncomplicated press-fit between the outer shell and the voltage-carrying element. Advantageously, the connection means are adapted such that the at least one inner contact surface is biased against the voltage-carrying element.

According to still another advantageous embodiment of the device according to the present invention, the at least one inner contact surface surrounds the voltage-carrying element. By this embodiment, the press-fit provided by the connection means is further improved, and the production of the device is further facilitated by the surrounding inner contact surface, which seals the region of the connection means and prevents the filler from passing when it is in a liquid state.

According to yet another advantageous embodiment of the device according to the present invention, the connection means comprise a circumferential groove which has a radial extension and is formed around the voltage-carrying element, where the groove is radially outwardly of the at least one inner contact surface and opens into said space, and the groove is filled with the filler. By the groove, the press-fit produced by the connection means is further enhanced as the groove expands to a certain degree in the radial direction when filled with the filler, providing an increased pressure on the inner contact surface, and consequently, an increased pressure on voltage-carrying element, and consequently, a further improved press-fit. Hereby, an improved bushing for medium and high voltage is provided, and a bushing for medium and high voltage which can be produced in an efficient way is also provided.

Further, the inventors have found that if the groove is shallow enough, i.e. the axial extension of the groove is suitably short, the groove will be electrically shielded by the screen of an elbow contact to which the device is connected in a manner known to the person skilled in the art. Thus, in case any air pockets or voids would be present in the groove, partial discharges are prevented by the shielding of the screen of an elbow contact.

According to an advantageous embodiment of the device according to the present invention, the groove is annular and continuous in the circumferential direction, and surrounds the voltage-carrying element. By this embodiment, a further improved press-fit is attained. The groove is continuous in the sense that one groove surrounds the voltage-carrying element, and that there are no radial walls or struts which divide the groove in the circumferential direction.

According to a further advantageous embodiment of the device according to the present invention, the outer shell has a circumferential edge which is folded inwardly to define said groove. This is an efficient way to produce the connection means and the groove of said connection means, and provides an efficient location of the connections means at one of the end regions of the outer shell, which improves and facilitates the production of the device. Hereby, an improved bushing for medium and high voltage is provided, and a bushing for medium and high voltage which can be produced in an efficient way is also provided.

According to an advantageous embodiment of the device according to the present invention, the device comprises at least one conductive shielding element for suppressing the electric field in the region of the outer contact surface of the outer shell, and the shielding element is provided in said space.

In prior art, the shielding element is moulded inside the wall of the outer shell. By placing the shielding element in said space, the production of the outer shell is radically facilitated, providing a low cost outer shell. Since the shielding element is not moulded together with the outer shell, the shielding element can be made of advantageous conductive materials which can not be properly used when moulded together with the outer shell, e.g. conductive polymers. Flexibility in positioning the shielding element and selecting shielding elements made of different materials after the outer shell has been produced is also provided. Thus, the production of the device is made more flexible, providing an improved bushing for medium and high voltage, and a low-cost bushing for medium and high voltage which can be produced in an efficient way. The shielding element can be made of any suitable conductive material, e.g. a conductive metal, a conductive polymer etc.

According to another advantageous embodiment of the device according to the present invention, the shielding element is axially extending and forms a screen. Hereby, an efficient shielding is provided.

According to a further advantageous embodiment of the device according to the present invention, the shielding element is situated somewhere along said section of said part of the axial extension of the voltage-carrying element.

According to an advantageous embodiment of the device according to the present invention, where the device comprises the conductive shielding element, the shielding element is radially spaced from the inner periphery of the outer shell, providing a gap in the radial direction between the shielding element and the inner periphery of the outer shell, and the gap is filled with the filler. Thus, the shielding element and the inner periphery of the outer shell define the gap. By said gap, the filler is provided between the shielding element and the inner periphery of the outer shell, and the formation of any air pockets or voids between the shielding element and the outer shell is prevented. Voids or air pockets in the filler increase the risk of partial discharges. Thus, this embodiment provides for an improved bushing for medium and high voltage.

According to a further advantageous embodiment of the device according to the present invention, where the device comprises the conductive shielding element, a plurality of support members are provided, each having a radial extension, and the support members are adapted to provide the gap between the shielding element and the inner periphery of the outer shell. This is an efficient way to space the shielding element from the outer shell, which still allows the filler to reach the gap therebetween. The support member can have several suitable designs, e.g. in the form of an elongated leg.

According to another advantageous embodiment of the device according to the present invention, where the device comprises the conductive shielding element, at least two of the plurality of support members are circumferentially spaced apart. Hereby, the filler can efficiently fill the gap.

According to still another advantageous embodiment of the device according to the present invention, where the device comprises the conductive shielding element, the support members are integral with the shielding element. As an alternative, the inner periphery of the outer shell can be provided with the support members. To facilitate the assembly of the device, the inner periphery of the outer shell, or the shielding element, can be provided with axial guiding grooves which are complementary to the support members, whereby the shielding element can be inserted and easily positioned in a correct position in said space.

According to yet another advantageous embodiment of the device according to the present invention, where the device comprises the conductive shielding element, the device comprises a conductive member which is connected to the shielding element and extends through the outer shell and is exposed to the outside of the outer shell. Hereby, a conductive path between the shielding element and the exterior of the outer shell is provided in an efficient way, which efficiently enables measurements known to the person skilled din the art. Advantageously, the outer periphery of the shielding element is provided with a protrusion adapted to receive the conductive member. Hereby, the conductive member can be brought into a firm contact with the shielding element without penetrating the inner periphery of the shielding element.

According to another advantageous embodiment of the device according to the present invention, where the device comprises the conductive shielding element and the conductive member, the conductive member is a self-tapping member adapted to penetrate the outer shell. Advantageously, the outer periphery of the outer shell is provided with a notch, and the shielding element and the inner periphery of the outer shell are designed in such a way, e.g. by a suitable arrangement of the guiding grooves and the support members, that the conductive member is received by the protrusion of the shielding element when it penetrates the outer shell at said notch.

According to an advantageous embodiment of the device according to the present invention, where the device comprises the conductive shielding element, the shielding element is tubular and surrounds the voltage-carrying element. Hereby, an efficient shield for suppressing the electric field in the region of the outer contact surface of the outer shell is provided, which also facilitates the production and assembly of the device.

According to an advantageous embodiment of the device according to the present invention, said filler is in a solid state. Hereby, the filler contributes to the mechanical strength of the device, and the device is further improved.

According to a further advantageous embodiment of the device according to the present invention, said filler is a filler moulded and permitted to solidify in said space. Hereby, the filling of the space becomes easier and more accurate (no voids or air pockets left), and the production and assembly of the device is further improved.

According to another advantageous embodiment of the device according to the present invention, said filler comprises an elastomer. However, several other fillers are also possible.

According to yet another advantageous embodiment of the device according to the present invention, said filler comprises polyurethane as a main constituent. However, several other suitable polymers with satisfactory electrical properties are also possible.

According to still another advantageous embodiment of the device according to the present invention, the voltage-carrying element is exposed to and in contact with the filler. This provides for a facilitated and efficient bushing. Advantageously, the outer periphery of the voltage-carrying element is made of copper, which provides an advantageous adhesion between the voltage-carrying element, the filler, which advantageously comprises polyurethane, and the outer shell, which advantageously is made of polybutylene terephthalate (PBT). Since the filler is in direct contact with both the voltage-carrying element and the outer shell, the filler will act as a sealing agent, and will prevent SF₆ from leaving the container, which can include switchgear, and prevent humidity to enter the container. The voltage-carrying element can also be made of aluminium, or any other suitable conductive metal, or material.

According to an advantageous embodiment of the device according to the present invention, the voltage-carrying element has a modified surface for improved adhesion to the solid filler in the region in which it contacts the filler. Such a modification of the surface may include the application of any layer of material of better adherence to the filler, or a physical modification, e.g. a roughening of the surface, by any surface treatment.

According to an advantageous embodiment of the device according to the present invention, the device comprises a bushing, and the voltage-carrying element thereof is a conductor extending axially through said outer shell. Advantageously, the conductor is adapted to be connected to a cable outside the space defined between the conductor and the outer shell, and also outside a container wall of which the bushing protrudes. Advantageously, the outer shell defines a truncated cone narrowing towards that end region in which the outer shell is connected to the conductor. The conductor can for example comprise one or several busbars.

According to a further advantageous embodiment of the device according to the present invention, the outer shell is formed by a thermoplastic polymer. The outer shell can be made of polybutylene terephthalate (PBT), polyester, or any other suitable thermoplastic.

The above-mentioned objects of the present invention are also attained by providing an electric installation, comprising a container with a wall connected to ground, and a device for electric connection to an energy supply conductor for medium and/or high voltage, the device protruding through and being physically connected to said wall, **characterized in that** the device comprises the features mentioned in any of the appended claims 1 to 15, or the features of any of the above-mentioned advantageous embodiments.

Further advantageous embodiments of the device according to the present invention and further advantages with the present invention emerge from the detailed description of embodiments.

### Brief Description of the Drawings

The present invention will now be described, for exemplary purposes, in more detail by way of embodiments and with reference to the enclosed drawings, in which:
- Fig. 1: is a schematic side cross-section view of an embodiment of the device according to the present invention;
- Fig. 2: is a schematic side view of an embodiment of the conductive shielding element of the device according to the present invention;
- Fig. 3: is a schematic top view of the conductive shielding element of Fig. 2; and
- Fig. 4: is a schematic side cross-section view of an embodiment of the device according to the present invention during production;

### Detailed Description of Preferred Embodiments

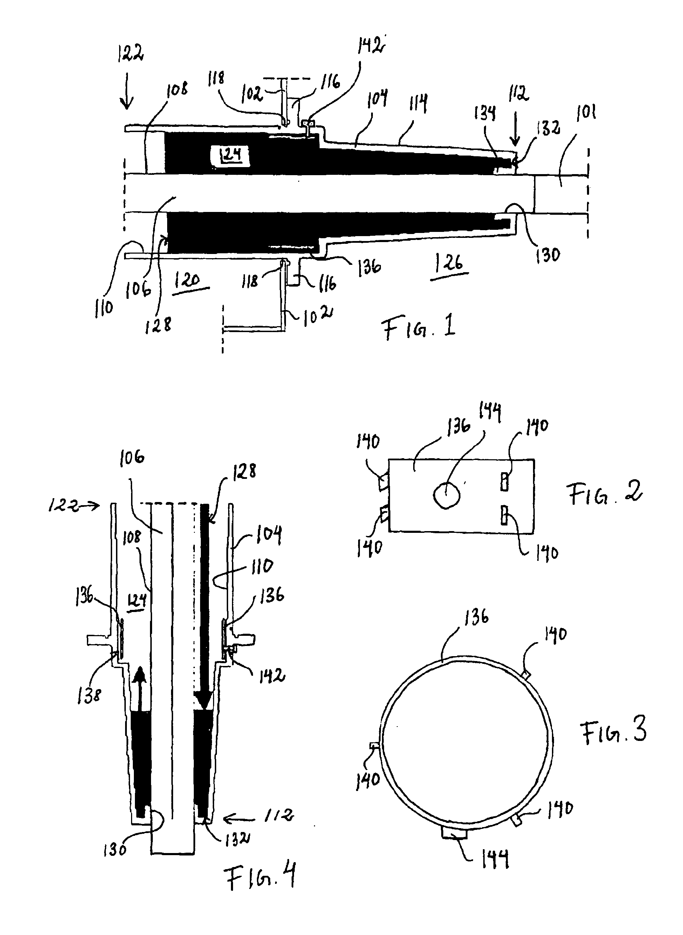

Fig. 1 shows an embodiment of the device according to the present invention. The device is a bushing for electric connection to an energy supply conductor 101 for medium and/or high voltage, e.g. 12, 24 or 36 kV, such as a cable 101, and the device is adapted to protrude through and be mounted to a wall 102 of a container, wherein said wall 102 is grounded. The device comprises an electrically insulating part in the form of a tubular outer shell 104 and a voltage-carrying element 106 which is elongated, has the shape of a rod and has an outer periphery 108. The voltage-carrying element 106 is a conductor for conducting a current and is made of bare copper. The outer shell 104 has an inner periphery 110 and defines a longitudinal axis x-x, and the voltage-carrying element 106 extends in the axial direction of the outer shell 104. The outer shell 104 is formed by polybutylene terephthalate (PBT), but any other suitable thermoplastic can also be used, and defines a tubular element shaped as a truncated cone, and in its narrow first end region 112 the outer shell 104 is connected to the voltage-carrying element 106. On its outer periphery 114 the outer shell 104 is provided with a flange 116 presenting an outer contact surface 118 for connection to the wall 102 of the container and against which the wall 102 is to bear. The flange is attached to the wall 102 in conventional ways known to the skilled person, for example by means of bolts and holes provided in the flange 116. The outer shell 104 electrically insulates the voltage-carrying element 106 from the wall 102, and prevents any short circuit or electrical discharges between the voltage-carrying element 106 and the wall 102. The longitudinal axis x-x of the outer shell 104 extends substantially perpendicular to the plane of the wall 102. When the device is mounted to the wall 102, the voltage-carrying element 106 protrudes through an opening in the wall 102 to be connected to a cable 101 outside 126 the container space 120 enclosed by the wall 102 of the container and the device. Said container space 120 is here filled with SF₆.

From the first end region 112 where the outer shell 104 is connected to voltage-carrying element 106, the outer shell 104 extends along its longitudinal axis x-x and along at least a part of the axial extension of the voltage-carrying element 106, between the first end region 112 and a second end region 122 of the outer shell 104, with a space 124 between its inner periphery 110 and the outer periphery 108 of the voltage-carrying element 106. The outer shell 104 is adapted to separate the space 124 from an atmosphere outside 126 the container to which the device is connected. At least along a section of said part of the axial extension of the voltage-carrying element 106 the space 124 is filled with a filler 128 of an electrically insulating material other than that of the outer shell 104, the filler 128 completely filling the space 124 along said section. The filler 128 is in a solid state and has polyurethane as a main constituent. However, several other suitable polymers with satisfactory electrical properties are also possible. The outer contact surface 118 is provided at a position along said part of the axial extension of the voltage-carrying element 106.

In the first end region 112, the outer shell 104 comprises connection means, or a connection unit, for connecting the outer shell 104 to the voltage-carrying element 106, and the connection means are adapted to provide a press-fit, or interference fit, between the outer shell 104 and the voltage-carrying element 106. The connection means comprise an inner contact surface 130 for contact with the outer periphery 108 of the voltage-carrying element 106, and the inner contact surface 130 is provided radially inwardly of the remainder of the inner periphery 110 of the outer shell 104. The inner contact surface 130 is adapted to be biased against the voltage-carrying element 106. The inner contact surface 130 surrounds the voltage-carrying element 106 around the entire circumference of the voltage-carrying element 106. The outer periphery 108 of the voltage-carrying element 106 is exposed to and in contact with the filler 128 with the exception of the contact between the inner contact surface 130 and the voltage-carrying element 106. Further, the connection means comprise a circumferential groove 132 which has a radial extension and is formed around the voltage-carrying element 106. The groove 132 is radially outwardly of the inner contact surface 130 and opens into said space 124, and the groove 132 is filled with the filler 128. The groove 132 has a substantially U-shaped cross-section in the circumferential direction, and is annular and continuous in the circumferential direction. The groove 132 surrounds the voltage-carrying element 106 around the entire circumference of the voltage-carrying element 106. The outer shell 104 has a circumferential edge 134 in the first end region 112 which is folded inwardly to define the groove 132, and consequently, the groove 132 and the inner contact surface 130 of the connection means are integral with the outer shell 104. The circumferential edge 134 is folded to provide for said press-fit, or interference fit, between the inner contact surface 130 and the outer periphery 108 of the voltage-carrying element 106. In the second end region 122, a barrier element can be provided which encloses and delimits said space 124.

In the first end region 112, the voltage-carrying element 106 is adapted to be electrically connected to the energy supply conductor 101, such as a cable. The connection between the voltage-carrying element 106 and the energy supply conductor 101 is performed in ways known to the skilled person.

The device comprises an axially extending conductive shielding element 136 for suppressing the electric field in the region of the outer contact surface 118 of the outer shell 104. The electric field is produced by the voltage-carrying element 106. The shielding element 136 is provided in said space. Herein, the shielding element 136 is made of a conductive polymer, but any suitable conducting material can be used, such a suitable conducting metal. The shielding element 136 is provided adjacent to the wall 102 of the container when the device is connected thereto. The shielding element 136 is radially spaced from the inner periphery 110 of the outer shell 104, providing a gap 138 in the radial direction between the shielding element 136 and the inner periphery 110 of the outer shell 104, and the gap 138 is filled with the filler 128.

With reference to Figs. 2 and 3, the shielding element 136 is tubular and surrounds the voltage-carrying element 106, and the shielding element 136 is provided with a plurality of support members 140, each having a radial extension. Herein, the support members 140 include three pairs of support members 140, and the three pairs are evenly distributed and spaced from each other in the circumferential direction. The support members 140 are adapted to provide the gap 138 between the shielding element 136 and the inner periphery 110 of the outer shell 104. Advantageously, the support members 140 are integral with the shielding element 136 and moulded together with the shielding element 136. However, it is to be understood that the support members can have other designs, and can be attached to the shielding element by other means.

The device comprises a conductive member 142, in the form of a screw in a suitable conductive metal, such as copper, or a conductive polymer etc., which is connected to the shielding element 136 and extends through the outer shell 104 to the outside 126 and the outer periphery 114 of the outer shell 104. The conductive member 142 is a self-tapping member adapted to penetrate the outer shell 104. By means of the conductive member 142, measurements known to the skilled person can be performed in an efficient way. The outer periphery of the shielding element 136 is provided with a protrusion 144 adapted to receive the conductive member 142.

The container and the internal connection of the device with bus bars, or conductors, inside the container are carried out in ways known to the person skilled in the art.

The invention shall not be considered limited to the embodiments illustrated, but can be modified and altered in many ways by one skilled in the art, without departing from the scope of the appended claims.

## Claims

1. A device for electric connection to an energy supply conductor (101) for medium and/or high voltage, comprising
a voltage-carrying element (106) with an outer periphery (108), and
a tubular outer shell (104) with an inner periphery (110), the outer shell (104) defining a longitudinal axis (*x-x*) and being formed by a polymer and connected to the voltage-carrying element (106),
the voltage-carrying element (106) extends in the axial direction of the outer shell (104), and along at least a part of the axial extension of the voltage-carrying element (106) the outer shell (104) extends axially with a space (124) between its inner periphery (110) and the outer periphery (108) of the voltage-carrying element (106),
the outer shell (104) being provided with an outer contact surface (118) for connection to a wall (102) of a container somewhere along said part of the axial extension of the voltage-carrying element (106),
the outer shell (104) is adapted to separate the space (124) from an atmosphere outside (126) the container to which the device is connected,
at least along a section of said part of the axial extension of the voltage-carrying element (106) the space (124) is filled with a filler (128) of an electrically insulating material other than that of the outer shell (104), the filler (128) completely filling the space (124) along said section, **characterized in that** the outer shell (104) comprises connection means for connecting the outer shell (104) to the voltage-carrying element (106), **in that** the connection means are adapted to provide a press-fit between the outer shell (104) and the voltage-carrying element (106), and **in that** the connection means comprise at least one inner contact surface (130) for contact with the outer periphery (108) of the voltage-carrying element (106), the at least one inner contact surface (130) being provided radially in-wardly of the remainder of the inner periphery (110) of the outer shell (104).

2. A device according to claim 1, **characterized in that** the connections means are situated somewhere along said section of said part of the axial extension of the voltage-carrying element (106).

3. A device according to claim 1 or 2, **characterized in that** the outer shell (104) extends axially with a space (124) between its inner periphery (110) and the outer periphery (108) of the voltage-carrying element (106) between a first end region (112) and a second end region (122), and **in that** the connection means are provided in one of the end regions (112, 122).

4. A device according to any of the claims 1 to 3, **characterized in that** the connection means are integral with the outer shell (104).

5. A device according to claim 1, **characterized in that** the at least one inner contact surface (130) surrounds the voltage-carrying element (106).

6. A device according to claim 1 or 5, **characterized in that** the connection means comprise a circumferential groove (132) which has a radial extension and is formed around the voltage-carrying element (106), **in that** the groove (132) is radially outwardly of the at least one inner contact surface (130) and opens into said space (124), and **in that** the groove (132) is filled with the filler (128).

7. A device according to claim 6, **characterized in that** the groove (132) is annular and continuous in the circumferential direction, and surrounds the voltage-carrying element (106).

8. A device according to claim 6 or 7, **characterized in that** the outer shell (104) has a circumferential edge (134) which is folded inwardly to define said groove (132).

9. A device according to any of the claims 1 to 8, **characterized in that** the device comprises at least one conductive shielding element (136) for suppressing the electric field in the region of the outer contact surface (118) of the outer shell (104), and **in that** the shielding element (136) is provided in said space (124).

10. A device according to claim 9, **characterized in that** the shielding element (136) is situated somewhere along said section of said part of the axial extension of the voltage-carrying element (106).

11. A device according to any of the claims 1 to 10, **characterized in that** said filler (128) is in a solid state.

12. A device according to any of the claims 1 to 11, **characterized in that** the voltage-carrying element (106) is exposed to and in contact with the filler (128).

13. A device according to any of the claims 1 to 12, **characterized in that** the outer shell (104) is formed by a thermoplastic polymer.

14. A device according to any of the claims 1 to 13, **characterized in that** the device comprises a bushing, and **in that** the voltage-carrying element (106) thereof is a conductor extending axially through said outer shell (104).

15. An electric installation, comprising a container with a wall (102) connected to ground, and a device for electric connection to an energy supply conductor (101) for medium and/or high voltage, the device protruding through and being physically connected to said wall (102), **characterized in that** the device comprises the features mentioned in any of the claims 1 to 14.

## Patentansprüche

1. Vorrichtung für eine elektrische Verbindung mit einem Energieversorgungsleiter (101) für Mittel- und/oder Hochspannung, umfassend:
- ein Spannungsführendes Element (106) mit einer äußeren Peripherie (108), und
- eine rohrartige äußere Hülle (104) mit einer inneren Peripherie (110), wobei die äußere Hülle (104) eine Längsachse (x-x) definiert und durch ein Polymer gebildet ist und mit dem Spannungsführenden Element (106) verbunden ist,
das Spannungsführende Element (106) erstreckt sich in die axiale Richtung der äußeren Hülle (104), und entlang wenigstens eines Teils der axialen Erstreckung des Spannungsführenden Elements (106) erstreckt sich die äußere Hülle (104) mit einem Raum (124) zwischen ihrer inneren Peripherie (110) und der äußeren Peripherie (108) des Spannungsführenden Elements (106),
die äußere Hülle (104) ist mit einer äußeren Kontaktoberfläche (118) für eine Verbindung mit einer Wand (102) eines Behälters irgendwo entlang des Teils der axialen Erstreckung des Spannungsführenden Elements (106) versehen,
die äußere Hülle (104) ist ausgelegt, um den Raum (124) von einer Atmosphäre außerhalb (126) des Behälters, mit dem die Vorrichtung verbunden ist, zu trennen,
wenigstens entlang eines Abschnitts des Teils der axialen Erstreckung des Spannungsführenden Elements (106) ist der Raum (124) mit einem Füllmaterial (128) eines elektrisch isolierenden Materials, das verschieden von dem der äußeren Hülle ist (104), gefüllt, wobei das Füllmaterial (128) den Raum (124) entlang des Abschnitts vollständig füllt, dadurch gegenzeichnet, dass die äußere Hülle (104) Verbindungsmittel zum Verbinden der äußeren Hülle (104) mit dem Spannungsführenden Element (106) umfasst, dass die Verbindungsmittel ausgelegt sind, um einen Presssitz zwischen der äußeren Hülle (104) und dem Spannungsführenden Element (106) bereitzustellen, und dass die Verbindungsmittel wenigstens eine innere Kontaktoberfläche (130) für einen Kontakt mit der äußeren Peripherie (108) des Spannungsführenden Elements (106) umfassen, wobei die wenigstens eine innere Kontaktoberfläche (130) radial innen bezüglich des Restes der inneren Peripherie (110) der äußeren Hülle (104) bereitgestellt ist.

2. Vorrichtung nach Anspruch 1, **dadurch gekennzeichnet, dass** die Verbindungsmittel irgendwo entlang des Abschnitts des Teils der axialen Erstreckung des Spannungsführenden Elements (106) angeordnet sind.

3. Vorrichtung nach Anspruch 1 oder 2, **dadurch gekennzeichnet, dass** sich die äußere Hülle (104) axial mit einem Raum (124) zwischen ihrer inneren Peripherie (110) und der äußeren Peripherie (108) des Spannungsführenden Elements (106) zwischen einem ersten Endbereich (112) und einem zweiten Endbereich (122) erstreckt, und dass die Verbindungsmittel in einem der Endbereiche bereitgestellt sind.

4. Vorrichtung nach einem der Ansprüche 1 bis 3, **dadurch gekennzeichnet, dass** die Verbindungsmittel integral mit der äußeren Hülle (104) sind.

5. Vorrichtung nach Anspruch 1, **dadurch gekennzeichnet, dass** wenigstens eine innere Kontaktoberfläche (130) das Spannungsführende Element (106) umgibt.

6. Vorrichtung nach Anspruch 1 oder 5, **dadurch gekennzeichnet, dass** die Verbindungsmittel eine Umfangsvertiefung (132) umfassen, die eine radiale Erstreckung aufweist und um das Spannungsführende Element (106) herum ausgebildet ist, dass die Vertiefung (132) von der wenigstens einen inneren Kontaktoberfläche (132) aus radial nach außen gerichtet ist und sich in den Raum (124) öffnet, und dass die Vertiefung (132) mit dem Füllmaterial (128) gefüllt ist.

7. Vorrichtung nach Anspruch 6, **dadurch gekennzeichnet, dass** die Vertiefung (132) kreisartig und kontinuierlich in der Umfangsrichtung ist und das Spannungsführende Element (106) umgibt.

8. Vorrichtung nach Anspruch 6 oder 7, **dadurch gekennzeichnet, dass** die äußere Hülle (104) einen Umfangsrand (134) aufweist, der nach innen gefaltet ist, um die Vertiefung (132) zu definieren.

9. Vorrichtung nach einem der Ansprüche 1 bis 8, **dadurch gekennzeichnet, dass** die Vorrichtung wenigstens ein leitendes Abschirmelement (136) zum Unterdrücken des elektrischen Feldes im Bereich der äußeren Kontaktoberfläche (118) der äußeren Hülle (104) umfasst, und dass das Abschirmelement (136) in dem Raum (124) bereitgestellt ist.

10. Vorrichtung nach Anspruch 9, **dadurch gekennzeichnet, dass** das Abschirmelement (136) irgendwo entlang des Abschnitts des Teils der axialen Erstreckung des Spannungsführenden Elements (106) angeordnet ist.

11. Vorrichtung nach einem der Ansprüche 1 bis 10, **dadurch gekennzeichnet, dass** das Füllmaterial (128) in einem festen Zustand ist.

12. Vorrichtung nach einem der Ansprüche 1 bis 11, **dadurch gekennzeichnet, dass** das Spannungsführende Element (106) zum Füllmaterial (128) hin freiliegt und mit diesem in Kontakt ist.

13. Vorrichtung nach einem der Ansprüche 1 bis 12, **dadurch gekennzeichnet, dass** die äußere Hülle (104) aus einem thermoplastischen Polymer ausgebildet ist.

14. Vorrichtung nach einem der Ansprüche 1 bis 13, **dadurch gekennzeichnet, dass** die Vorrichtung eine Durchführung umfasst, und dass das Spannungsführende Element (106) derselben ein Leiter ist, der sich axial durch die äußere Hülle (104) erstreckt.

15. Elektrische Installation, umfassend einen Behälter mit einer Wand (102), die mit Masse verbunden ist, und eine Vorrichtung für eine elektrische Verbindung mit einem Energieversorgungsleiter (101) für Mittel- und/oder Hochspannung, wobei sich die Vorrichtung durch die Wand (102) erstreckt und physikalisch mit dieser verbunden ist, **dadurch gekennzeichnet, dass** die Vorrichtung die Merkmale aus irgendeinem der Ansprüche 1 bis 14 umfasst.

## Revendications

1. Dispositif de connexion électrique à un conducteur d'alimentation en énergie (101) pour moyenne et/ou haute tensions, comprenant :
un élément conducteur de tension (106) ayant une périphérie extérieure (108), et
une enveloppe extérieure tubulaire (104) ayant une périphérie intérieure (110), l'enveloppe extérieure (104) définissant un axe longitudinal (x-x) et étant formée par un polymère et assemblée à l'élément conducteur de tension (106),
dans lequel :
l'élément conducteur de tension (106) s'étend dans la direction axiale de l'enveloppe extérieure (104), et, le long d'au moins une partie de l'extension axiale de l'élément conducteur de tension (106), l'enveloppe extérieure (104) s'étend axialement avec un espace (124) entre sa périphérie intérieure (110) et la périphérie extérieure (108) de l'élément conducteur de tension (106),
l'enveloppe extérieure (104) est pourvue d'une surface de contact extérieure (118) destinée à être accouplée à une paroi (102) d'un contenant quelque part le long de ladite partie de l'extension axiale de l'élément conducteur de tension (106),
l'enveloppe extérieure (104) est conçue pour séparer l'espace (124) d'une atmosphère (126) extérieure au contenant auquel le dispositif est raccordé,
au moins le long d'une section de ladite partie de l'extension axiale de l'élément conducteur de tension (106), l'espace (124) est rempli d'une charge (128) d'un matériau électriquement isolant autre que celui de l'enveloppe extérieure (104), la charge (128) remplissant complètement l'espace (124) le long de ladite section, **caractérisé en ce que** l'enveloppe extérieure (104) comprend des moyens d'assemblage destinés à assembler l'enveloppe extérieure (104) à l'élément conducteur de tension (106), **en ce que** les moyens d'assemblage sont conçus pour assurer un ajustement avec serrage entre l'enveloppe extérieure (104) et l'élément conducteur de tension (106), et **en ce que** les moyens d'assemblage comprennent au moins une surface de contact intérieure (130) destinée à être en contact avec la périphérie extérieure (108) de l'élément conducteur de tension (106), l'au moins une surface de contact intérieure (130) étant placée radialement à l'intérieur du reste de la périphérie intérieure (110) de l'enveloppe extérieure (104).

2. Dispositif selon la revendication 1, **caractérisé en ce que** les moyens d'assemblage sont situés quelque part le long de ladite section de ladite partie de l'extension axiale de l'élément conducteur de tension (106).

3. Dispositif selon la revendication 1 ou 2, **caractérisé en ce que** l'enveloppe extérieure (104) s'étend axialement avec un espace (124) entre sa périphérie intérieure (110) et la périphérie extérieure (108) de l'élément conducteur de tension (106) entre une première région d'extrémité (112) et une seconde région d'extrémité (122), et **en ce que** les moyens d'assemblage sont placés dans l'une des régions d'extrémité (112, 122).

4. Dispositif selon l'une quelconque des revendications 1 à 3, **caractérisé en ce que** les moyens d'assemblage font partie intégrante de l'enveloppe extérieure (104).

5. Dispositif selon la revendication 1, **caractérisé en ce que** l'au moins une surface de contact intérieure (130) entoure l'élément conducteur de tension (106).

6. Dispositif selon la revendication 1 ou 5, **caractérisé en ce que** les moyens d'assemblage comprennent une rainure circonférentielle (132) qui a une extension radiale et est formée autour de l'élément conducteur de tension (106), **en ce que** la rainure (132) se trouve radialement à l'extérieur de l'au moins une surface de contact intérieure (130) et débouche dans ledit espace (124), et **en ce que** la rainure (132) est remplie de la charge (128).

7. Dispositif selon la revendication 6, **caractérisé en ce que** la rainure (132) est annulaire et continue dans la direction circonférentielle, et entoure l'élément conducteur de tension (106).

8. Dispositif selon la revendication 6 ou 7, **caractérisé en ce que** l'enveloppe extérieure (104) présente un bord circonférentiel (134) qui est replié vers l'intérieur afin de définir ladite rainure (132).

9. Dispositif selon l'une quelconque des revendications 1 à 8, **caractérisé en ce que** le dispositif comprend au moins un élément de blindage conducteur (136) destiné à supprimer le champ électrique dans la région de la surface de contact extérieure (118) de l'enveloppe extérieure (104), et **en ce que** l'élément de blindage (136) est placé dans ledit espace (124).

10. Dispositif selon la revendication 9, **caractérisé en ce que** l'élément de blindage (136) est situé quelque part le long de ladite section de ladite partie de l'extension axiale de l'élément conducteur de tension (106).

11. Dispositif selon l'une quelconque des revendications 1 à 10, **caractérisé en ce que** ladite charge (128) est dans un état solide.

12. Dispositif selon l'une quelconque des revendications 1 à 11, **caractérisé en ce que** l'élément conducteur de tension (106) est exposé à, et en contact avec, la charge (128).

13. Dispositif selon l'une quelconque des revendications 1 à 12, **caractérisé en ce que** l'enveloppe extérieure (104) est formée par un polymère thermoplastique.

14. Dispositif selon l'une quelconque des revendications 1 à 13, **caractérisé en ce que** le dispositif comprend une traversée, et **en ce que** son élément conducteur de tension (106) est un conducteur s'étendant axialement d'un côté à l'autre de ladite enveloppe extérieure (104).

15. Installation électrique, comprenant un contenant ayant une paroi (102) connectée à la masse, et un dispositif de connexion électrique à un conducteur d'alimentation en énergie (101) pour moyenne et/ou haute tensions, le dispositif faisant saillie à travers, et étant physiquement raccordé à, ladite paroi (102), **caractérisée en ce que** le dispositif comprend les caractéristiques mentionnées dans l'une quelconque des revendications 1 à 14.
